# EUROPEAN PATENT APPLICATION

(11) **EP 4 773 059 A1**
(43) Date of publication of application: **08.07.2026**
(21) Application number: 25150373.6
(22) Date of filing: 06.01.2025
(51) Int. Cl.: G06Q 20/20, G06Q 20/32, G06Q 20/38, G06Q 20/40, H04L 9/00

(54) **SYSTEM, DEVICES AND METHOD FOR AUTHENTICATING A TRANSACTION**

(71) Applicant: NXP B.V., 5656 AG Eindhoven (NL)
(72) Inventor: Veshchikov, Nikita, 5656 AG Eindhoven (NL); Davies, Gareth Thomas, 5656AG Eindhoven (NL)
(74) Representative: Schwarzweller, Thomas

(57) **Abstract**

A method (300) for authenticating a transaction comprises: identifying (425, 535) a first transaction made at a first physical location that includes a first transaction time; receiving (205) a request for a second transaction; and identifying (210, 240) the requested second transaction is made at a second physical location that includes a second transaction time. The method further comprises; computing using encryption (235) a distance between the first and second physical location; computing (320) a minimum speed to transition between the first and second location in a delta time between the first transaction time and the second transaction time; comparing (330) the computed minimum speed to a threshold; and determining (335) whether the requested second transaction is authentic in response to comparing the computed minimum speed to the threshold. In this manner, determining a distance, time delay and therefore minimum speed between two consecutive transactions provides an additional authentication using encryption.

## Description

### Technical Field

The technical field relates to a system, devices and method for authenticating a transaction as part of fraud detection. In particular, the technical field relates to scenarios where a card payment may be made from an unusual location, following which a bank may request additional authentication or simply block the payment.

### Background

It is known that each time when a user pays for a product or service using a bank card, the bank authenticates the card through the terminal that is used by a shop owner, or at least one further online authentication is required for the user to perform. It is also known that there are many different types of attacks that can result in requiring an authentication of a potentially unauthorized user that pretends to be a legitimate user. Such a potentially unauthorized user may be someone committing fraud, e.g., by attempting to use a card that has been cloned, or someone using credentials that have been stolen, or where a malicious shop owner might try to replay the authentication sequence at a later time, etc. When local devices (e.g., the authenticating server, the terminal or a local machine) cannot detect fraud cases, it is known that some such fraud cases may be detected by the authenticating server at the bank. For example, if a payment card was cloned and used in an unusual location the bank might request additional authentication or simply block the payment.

In recent years, it is known that modern payment applications aim to reduce the burden of proof on the user, whilst hopefully maintaining (or improving) the security/legitimacy of the payments. For example, instead of using a strong password users may now use a short personal identification number (PIN). Alternatively, a "tap and go" approach may be used that simply requires the user to physically present a payment card without being required to type in a PIN every single time. However, overall, whilst these approaches make payments faster and easier for the authorised user, they also make some of the attacks easier for an unauthorised user. As a result, more intelligence with respect to verification is placed into the 'back-end' system (e.g., the system that is supporting mobile payment methods), in a way that is transparent to the user and does not require additional tasks from him/her.

Today's payment card users are also more aware of privacy and do not want to reveal information about themselves. Moreover, legislation such as the UK's General Data Protection Regulation (GDPR) and comparable EU regulations/legislation encourages service providers to reduce the volume of user data that they hold and process. Thus, privacy-preserving techniques become more and more interesting for authentication systems.

It is known that a homomorphic encryption (HE) is a special type of encryption that allows computations to be performed on encrypted data without decrypting or knowing the secret key. This form of encryption is known as a privacy-enhancing technology due to its inherent utility in enabling analytics on encrypted data, e.g., in medical applications when a patient does not want to share his/her data with a company that can perform diagnostics. US9641489B1 and WO2023128341A1 describe types of fraud detection that use user location that is encrypted using HE that check if one or two users are in the same location or in a location that was seen previously.

It is also known that there are many different countermeasures and checks put in place in modern authentication systems that try to detect or prevent many different kinds of financial attacks and detect fraud. Accordingly, the inventors have recognized and appreciated that techniques are required to further improve the checking of current transactions or checking that the authentication performed by an authorised user is legitimate.

### Summary

Examples described herein provide a method for authenticating a transaction, for example in a detecting of a financial fraud, a bank server, a point of supply terminal and a card, as described in the accompanying claims. Specific example embodiments are set forth in the dependent claims. These and other aspects will be apparent from and elucidated with reference to the embodiments described hereinafter.

### Brief description of the drawings

Further details, aspects and example embodiments will be described, by way of example only, with reference to the drawings. In the drawings, like reference numbers are used to identify like or functionally similar elements. Elements in the figures are illustrated for simplicity and clarity and have not necessarily been drawn to scale.
FIG. 1 illustrates a simplified architecture for fraud detection, according to some examples described herein.
FIG. 2 illustrates a flowchart of operations on the point of sale (PoS) side arranged to follow the fraud detection protocol, according to some examples described herein.
FIG. 3 illustrates a flowchart of operations on the bank side to follow fraud detection protocol, according to some examples described herein.
FIG. 4 illustrates a flowchart of example operations for each of the three participants/entities that are involved during a successful authentication, according to some examples.
FIG. 5 illustrates a flowchart of example operations for each of four participants/entities that are involved during a successful authentication (with an additional privacy layer, together with a device such as a server in Google's or Apple's buildings, say), according to some examples.
FIG. 6 illustrates one example of a block diagram of a bank card and a PoS terminal, according to some examples.
FIG. 7 illustrates one example of a bank processing server (BPS), according to some examples.
FIG. 8 illustrates one functional example of a bank processing server (BPS), according to some examples.

### Detailed description

Examples herein described provide an enhanced approach to checking of current transactions, or checking that the authentication performed by an authorised user is legitimate, by including, in an authentication process, a privacy-preserving computation of distance between two physical (i.e., geographical) locations (e.g., a most recent physical location of a payment request and a current physical location of a payment request) followed by a computation of an average maximum speed for the user to move between these two physical locations. In this manner, examples describe an authentication approach that includes an additional way to verify that a user or a device is authentic and genuine.

Furthermore, in some examples, it is possible for the authentication entity to identify a problem resulting from a time and distance determination between the current authentication process and a most recent (previous) authentication process, which may indicate a specific type of fraud. In some examples, it is possible that the authentication entity, e.g., a bank/BPS may be able to detect a specific fraud based on the determination or computation performed, e.g., that someone has physically cloned a bank card of a customer if two authentications were performed in two different locations within a very short time interval (such that it is impossible to travel between the two locations) if both times a chip and PIN methods were used that indicates a bank card was cloned or copied.

Examples herein described propose thereafter to compare the computed average speed to a threshold, e.g., a maximum possible speed, average speed, in order to determine whether (or not) fraud has occurred during authentication. In this manner, it is possible to check if the user is physically able to travel at a certain speed between two points where the authentication happens, given modern transportation capabilities. In some examples, a fraudulent transaction detection based on such data may include determining the distance between two physical locations (preferably using global positioning system (GPS) data) coupled to a speed determination of a time taken between making two transactions at these two physical locations.

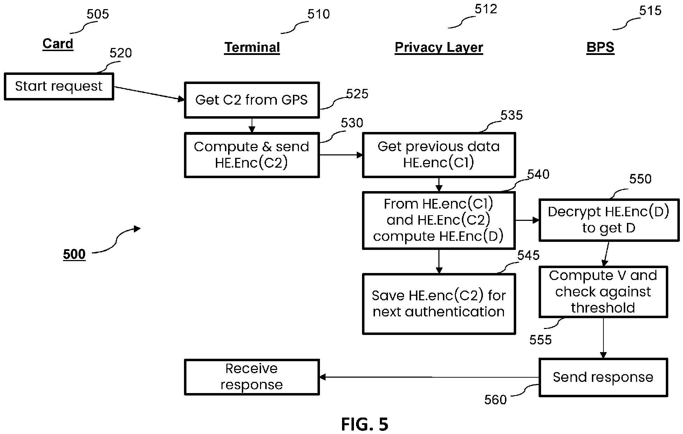

In general, in examples described herein, maintaining privacy of a person (e.g., a bank card holder), often termed 'computation on encrypted data', may be achieved using either of two main approaches: (i) Homomorphic Encryption (HE); and (ii) multi-party computation (MPC). A skilled artisan understands and appreciates that MPC is a generic approach and HE is a more specific version of computation on encrypted data, but where they each adopt a similar approach (`toolbox'), albeit with some small differences. Examples herein described are predominantly based on HE, as it is believed that the approach is more efficient. However, the concepts herein described are equally applicable to a MPC approach, where MPC uses encryption to `hide' the information, an example of which is described in FIG. 5.

In some examples, the authentication process may include checking whether the user is able to travel at a certain speed between the two authentication physical locations (previous and current), given modern transportation capabilities. In some examples, the fraudulent transaction detection may use homomorphically encrypted data, or may use multi-party computation to compute the same value (distance between two points). In some examples, the fraudulent transaction detection may employ a threshold feature, e.g., to have a staged fraudulent-risk assessment, which increases in line with a likelihood that the payment card (e.g., a bank card identified on the customer or user's phone) could not possibly have travelled that distance in that time, or a threshold that indicates that it is highly unlikely to have travelled that distance in that time. Furthermore, in examples described herein, user privacy is enhanced by hiding exact physical locations of the user and/or current and previous card payment requests from the authenticating server, e.g., bank.

In some examples, it is envisaged that the described authentication approach may be applied to many different systems that might require authentication but, for the sake of simplicity and clarity of explanations the examples described will focus on payment systems, bank cards and payment terminals. However, it is envisaged that other examples may include authentication to a service on a mobile phone, or could be used for authentication with government services. It is envisaged that other examples may include authentication for car access. It is envisaged that other examples may include authentication for automatic toll payments for cars that is adapted to include some identification mechanism. It is envisaged that other examples may include authentication for automatic payments for a parking based on a license plate. It is envisaged that other examples may include fraud detection in case of authentication at work places, for example where a company has restrictions to enter some offices or buildings.

Examples described herein focus on (bank) payment systems, bank cards and payment terminals (such as point of sale (PoS) terminals). In particular, the (bank) payment system uses two locations, and in some examples two types of locations, which in some examples may be a bank and a point of sale (PoS) terminal. It is noted that, in some examples, a PoS terminal may be a fixed shop, a moving shop (such as a hot dog/burger van), an ATM or even a restaurant located on the inside of a train.

For the examples described herein, a (bank) payment system is envisaged to include a server that handles communications and has access to the details of accounts of its clients for payments and authentication, hereinafter referred to as a bank processing server (BPS). For the examples described herein, a (bank) card may encompass a (bank) card that contains an user identifier (ID) and is used for payments by a user. In some examples, it is noted that instead of a physical bank card it is envisaged that the 'card' may encompass a virtual card, for example in an application of a smartphone or other device. For the examples described herein, it is envisaged that payment terminals (such as point of sale (PoS) terminals) may encompass a device that is able to communicate with a card on one side and with the bank on the other. For example, in this context, instead of a regular payment terminal it is envisaged that the terminal may also be an automated teller machine (ATM), a smartphone or a tablet of a shop owner.

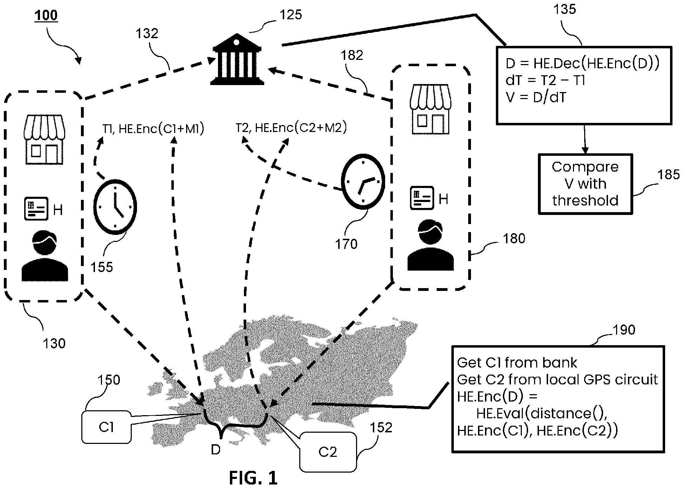

Referring now to FIG. 1, a simplified architecture 100 for fraud detection is illustrated, according to some examples described herein. In the simplified architecture 100, each PoS terminal knows its exact position, which in a typical scenario is reasonable as a vast majority of PoS terminals will be fixed/stationary, or will only move a small distance, e.g., a PoS terminal in a mobile vehicle (e.g., a burger van or ice cream van). In some examples, the PoS terminals are arranged to determine their location, for example, using an embedded GPS circuit. When a client authenticates itself using a card via a PoS terminal, e.g., a first PoS terminal 130 located at a first location C1 150, the first PoS terminal 130 sends information 132 about authentication and payment request to the BPS 125. The first PoS terminal 130 also sends information 132 that includes a time (T1) 155 and a homomorphic encryption of the previous location (C1) + with a random mask (M1) (HE.Enc(C1+M1)). At a later time, the client authenticates itself using the card via a different PoS terminal, e.g., second PoS terminal 180 located at a second location (C2) 152. The second PoS terminal 180 sends information 182 about authentication and payment request to the BPS 125. The second PoS terminal 180 also sends information 182 that includes a second time (T2) 170 and a homomorphic encryption of the current location (C2) + with a second random mask (M2) (HE.Enc(C2+M2)).

In accordance with examples described herein, the homomorphic encrypted distance, D, (referred to as HE.Enc(D)) between the current location of the client and the client's previous location at the point of previous authentication, is determined and provided as an additional information to the BPS 125. In order to send the homomorphic encrypted distance (HE.Enc(D)) the second PoS terminal 180 has to compute it. In some examples, this computation is performed in a way that does not reveal to the PoS terminal 180 the coordinates of the client's previous transaction at the first previous location (C1)150. This computation by the second PoS terminal 180 requires four inputs:
(i) Current location of the client, e.g., obtained using GPS coordinates from a GPS circuit of the PoS terminal 180 in location C2,
(ii) Homomorphically encrypted masked GPS coordinates HE.Enc(C1 + M1) from the previous location C1 150, which the second PoS terminal 180 obtains from the BPS 125,
(iii) A first random mask (M1) that is known by the card, and
(iv) A Public key that is used for homomorphic encryption.

The second PoS terminal 180 is then able to compute an encryption of the distance, D, by:
(i) Removing the mask M1 from HE.Enc(C1+M1) and obtaining HE.Enc(C1);
(ii) Computing using encryption (e.g., HE.Enc(C2)); noting that the second PoS terminal 180 can directly use its current location (C2) in the next computation, instead of HE.Enc(C2) for efficiency; and
(iii) Computing the encrypted distance between C1 and C2, for example using: HE.Enc(D) = HE.Eval(distance(), H(C1), H(C2)).

The encrypted distance HE.Enc(D), together with a second timestamp (T2) are sent to the BPS for a verification as to whether it is physically possible to travel the distance D, between C1 150 and C2 152 in the timeframe between T1 155 and T2 170.

Moreover, the second PoS terminal 180 has to compute a masked version of HE.Enc(C2), e.g., HE.Enc(C2+M2) for a future authentication and send it to the BPS 125. In some examples, the random mask M2 is generated by the card and sent to the second PoS terminal 180, which is also stored in the card and arranged to be used during the next transaction.

In some examples, in order to determine whether it is physically possible to travel the distance D, between C1 150 and C2 152 in the timeframe between T1 155 and T2 170, following a payment that occurs in a transaction, the system obtains a timestamp and the location, say using GPS coordinates, of the PoS terminal that was just used. During each transaction the system is able to compute the distance between the current location and the previous location where the payments were made and the difference in time between the two transactions. These two values (time and distance) allow a computation of the average speed at which the user had to travel between the two points of sale. If the speed is above a certain threshold, then it is determined that the latest transaction is likely to be fraudulent. For example, if the speed required to move from one point of sale to the next one point of sale is higher than 500 km/h, whilst both points of sale are inside of a city centre, then the second authentication is not coming from a legitimate user. In some examples, it is envisaged that the first authentication may be fraudulent, as a determination of distance and time may suggests that at least one is fraudulent. In some examples, therefore, a determination is made as to whether either of the two verification uses a stronger verification mechanism/approach. In this situation, it is envisaged that if the first transaction uses a stronger verification mechanism that cannot be circumvented then the second transaction is identified as the fraudulent one. In some examples, it is envisaged that if, say, the first transaction is the first transaction in a long time (e.g., there has been no purchases for a number of days, such as the last two days) then it is possible that a person may have travelled anywhere on earth. In such a situation, it is envisaged that a strong authentication may be required to validate the transaction, and thus a simple tap-and-go would not be acceptable or work. Following a use of a stronger verification mechanism, it is envisaged that the first transaction may be assumed as being fine and a chain of transaction verifications may be built from there (e.g., checking the 2^{nd}, 3^{rd} and subsequent transactions, etc with respect to average speed and time delays).

A homomorphic encryption scheme consists of four operations (e.g., algorithms performed by circuits):
(i) key generation that generates a public key and a private key,
(ii) encryption (HE.Enc), which turns a public key and a message into a ciphertext,
(iii) decryption (HE.Dec), which takes the private key and a ciphertext and turns it back into a message, and
(iv) evaluation (HE.Eval), which takes one or more ciphertexts and a function as input and outputs a new ciphertext.

Conceptually, it is envisaged that this means that an entity can perform computations (represented as functions) and apply them to ciphertexts, without knowing which message is encrypted by that specific ciphertext.

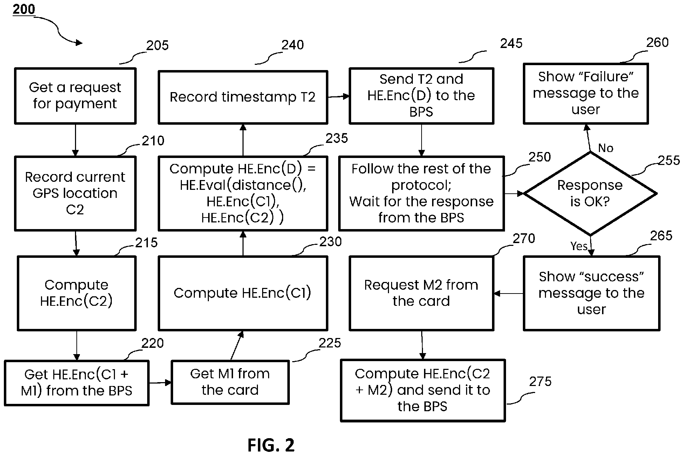

Referring now to FIG. 2, a flowchart 200 of operations on the PoS side is illustrated, where flowchart 200 is arranged to follow the fraud detection protocol, according to some examples described herein. For completeness, it is noted a PoS may be mobile and thus terminals are not necessarily fixed to one location whilst other PoS terminals may be fixed and almost never move. In some examples, it is envisaged that a parameter may be used to always obtain a location of the PoS terminal, for example obtain a GPS location from satellites for each new transfer (if the PoS terminal moves often). In other examples, the location may be updated on a regular basis or intermittently if the PoS terminal moves irregularly, rarely or from time to time or to only use the one embedded during the installation (fixed terminal).

The authentication flowchart 200 starts at 205 with a request for a payment, and at 210 a current location (C2) is recorded, for example using a GPS location. At 215, a computation of a homomorphic encryption (HE.Enc) of the current location (C2) is performed. At 220, a homomorphic encryption (HE.Enc) of the previous location (C1) + with a random mask (M1) obtained from the bank processing server (BPS) is performed. At 225, the PoS obtains the random mask (M1) from the card. At 230, the PoS computes the homomorphic encryption (HE.Enc) of the previous location (C1), and following that, at 235, the PoS computes using encryption (e.g., the homomorphic encryption of the distance (HE.Enc(D)), based on the homomorphic encryption evaluation of the distance and the homomorphic encryption (HE.Enc) of the previous location (C1) and the homomorphic encryption (HE.Enc) of the current location (C2). At 240, a second timestamp (T2) is recorded. In this example, it is assumed that the first timestamp T1 has been stored by the bank/BPS from the previous payment. At 245, the PoS sends the second timestamp (T2) and the homomorphic encryption of the distance (HE.Enc(D)) to the BPS. At 250, the authentication flowchart 200 follows the rest of the protocol and waits for a response from the BPS. At 255, the PoS determines whether a response from the BPS is ok? If the PoS determines that a response from the BPS is not ok at 255, at 260, the PoS shows a 'failure' message to the user. However, if the PoS determines that a response from the BPS is ok at 255, then at 265 the PoS shows a 'success' message to the user. At 270, the PoS requests a second random mask (M2) from the card and at 275 the PoS terminal computes a homomorphic encryption (HE.Enc) of the current location (C2) summed with the second random mask (M2) and sends the computation to the bank processing server (BPS).

In examples described herein, the use of homomorphic encryption ensures that each PoS terminal cannot learn the location of the client during the previous authentication and the random mask Mi ensures that the BPS (which has the decryption key) does not learn the real location of the client, and thus would not track the client's movements. It is noted that the BPS would always know an approximate location of the client, since when (s)he uses a payment terminal, the terminal would connect to the BPS over the wireless or wired network and this connection provides some information about the region or even the city in which the client is located in. This information is available either through the network information (such as an internet protocol (IP) address) or the merchant information that is known/recognised by the bank.

In some examples, it is note that since users can move through different time zones easily, and indeed may be in a different time zone w.r.t. the BPS, the protocol according to some examples takes that time zone information into account. Thus, it is known that the bank may derive the time zone based on the approximate location of the PoS terminal or the timestamp may be always referring to the current time in the UTC+0 time zone. In some examples, instead of using the received timestamp, the BPS may always rely on its own internal clock.

In examples described herein, and before the system is used, the BPS may be arranged to run a key generation for the homomorphic encryption scheme and communicate the public key to the PoS terminals served by its network. For clearer exposition in this description, we refer to 'location' as an integer value; however, in practice, it is envisaged that each 'location' would be a vector of fixed-point coordinates, with precision defined by the bank at system setup. In some examples described herein, it is envisaged that the operations and use of plaintext and homomorphic evaluation of addition/subtraction, may be performed for both representations. In some examples, it is envisaged that the public key can be either the same for all clients or it can be a single key per client. In some examples described herein, it is envisaged that the public key may be sent to the PoS terminal by the BPS or alternatively it is envisaged that the public key may be embedded in each card, in which case the card can send the public key to the PoS terminal.

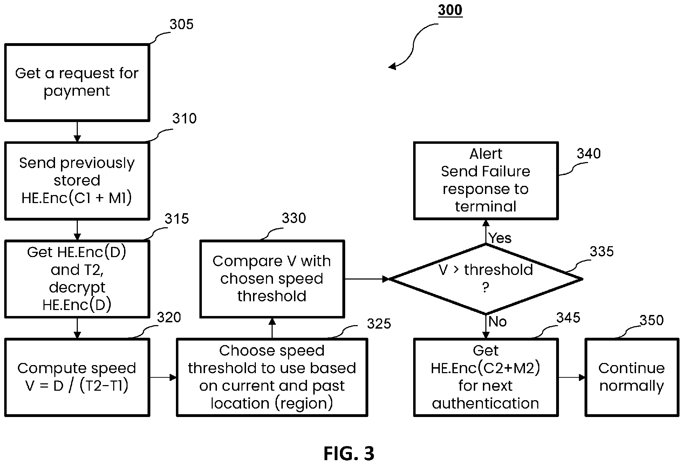

Referring now to FIG. 3 a flowchart 300 illustrates operations on the bank side, e.g., at a bank processing server (BPS), to follow fraud detection protocol, according to some examples described herein. The bank side flowchart 300 starts at 305 with a receipt of a request for a payment, and at 310 the BPS sends a previously stored homomorphic encryption (HE.Enc) of the previous location (C1) with a random mask (M1) (HE.Enc(C1+M1)). Thus, in some examples, the BPS is arranged to keep/store the latest HE.Enc(C1 + M1) and the timestamp (T1) that it obtained it from a first PoS that was used by a client. At 315, the BPS obtains a computed homomorphic encryption of the distance (HE.Enc(D)) from the PoS, and a second timestamp (T2), and decrypts the homomorphic encryption of the distance (HE.Enc(D)). In response to the BPS obtaining HE.Enc(D), the BPS needs to perform the following computations:
- Compute the time between the two operations: T_{Δ} = T2 - T1,
- Compute the distance D = HE.Dec(HE.Enc(D)),
- Compute the average speed V = D/T_{Δ}.

Thus, at 320, the BPS computes an average speed, V, based on the determined distance, D, and the timestamps, where: V=D/(T2-T1). At 325, the BPS selects a speed threshold to use, for example based on the first location (C1) and second location (C2). At 330, the BPS compares the computed average speed V with a chosen speed threshold. A determination is then made at 335, as to whether the average speed V is greater than the chosen speed threshold. If it is determined at 335, that the average speed V is greater than the chosen speed threshold, the BPS issues an alert and may send a failure response to the second PoS terminal at 340. However, if it is determined at 335, that the average speed V is not greater than the chosen speed threshold, the BPS obtains the homomorphic encryption of the current location (C2) + with the second random mask (M2) ((HE.Enc(C2+M2)) at 345. Thus, when the BPS receives new data (in this example from a new (second) PoS terminal, i.e., HE.Enc(C2+M2) and a new (second) timestamp (T2) the BPS needs to store them for the next authentication. The BPS operation then continues as normal at 350. Alternatively, at 345, it is envisaged that the BPS may also either obtain from the terminal its approximate location (e.g. country, region or city, etc.) or the BPS may infer it from the network information about its connection to the client (e.g., using the client's internet protocol (IP) address).

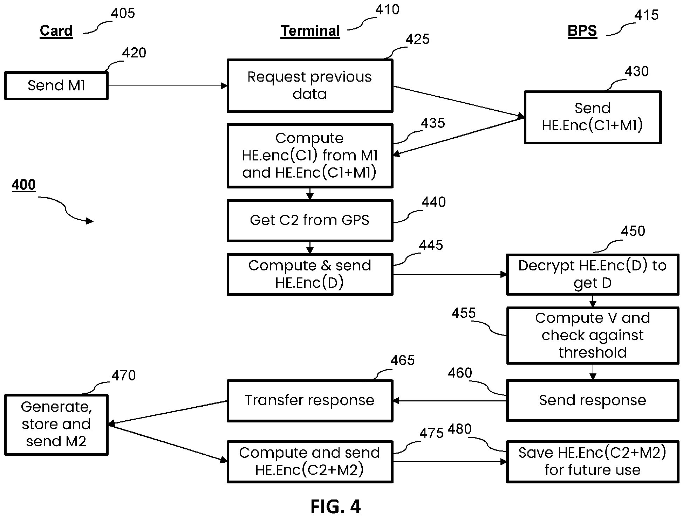

Referring now to FIG. 4, a flowchart 400 illustrates example operations for each of the three participants/entities that are involved during a successful authentication, according to some examples. The three participants/entities that are involved during a successful authentication include a card 405, a terminal (such as a PoS terminal) 410 and a BPS 415. In this example, the flowchart 400 starts at 420 with the card 405 sending a first random mask to the terminal 410. At 425, the terminal 410 requests previous data from the BPS 415. At 430, the BPS 415 sends the homomorphic encryption (HE.Enc) of the previous location (C1) + with the first random mask (M1) to the terminal 410. At 435, the terminal 410 computes and sends the homomorphic encryption of the previous location (HE.Enc(C1)) from the first random mask (M1) and the homomorphic encryption of the previous location with the first random mask (HE.Enc(C1+M1)). At 440, the terminal 410 obtains the current location (C2), say from a GPS, and at 445 computes and sends a homomorphic encryption of the computed distance (D) to the BPS 415.

At 450, the BPS 415 decrypts the received homomorphic encryption of the computed distance (D) to obtain the computed distance. At 455, the BPS 415 computes a speed, V, based on the computed distance and checks the speed V against a threshold level. At 460, the BPS 415 sends a response to the terminal 410, and at 465 the response is transferred to the card 405 from the terminal 410. At 470, the card 405 generates and stores a second random mask M2 and sends this to the terminal 410. At 475, the terminal 410 computes and sends the homomorphic encryption of the current location with the second random mask (HE.Enc(C2+M2)) to the BPS 415. At 480, the BPS 415 saves the homomorphic encryption of the current location with the second random mask (HE.Enc(C2+M2)) for subsequent/future use.

Referring now to FIG. 5, a flowchart 500 illustrates an alternative MPC example for each of the three participants/entities that are involved during a successful authentication with an additional privacy layer, where the BPS is able to communicate with the privacy layer separately, e.g., on their own, according to some examples. The three participants/entities that are involved during a successful authentication include a card 505, a terminal (such as a PoS terminal) 510, a privacy layer 512 and a BPS 515. Instead of performing computations in the terminal 510 it is possible to perform them in a privacy layer 512. In some examples, it is envisaged that a corporation that has computational capacity available in multiple locations in the world can readily serve as such privacy layer, for example Google^{™}, Facebook^{™}, Apple^{™}, Microsoft^{™}, Amazon^{™} amongst many others. In such scenarios, the corporation performing the privacy layer 512 will only provide the computational capacity to compute HE.Enc(D) = HE.EvaI( distance(), H(C1), H(C2) ) and send it to the authentication entity, e.g., the bank/BPS. However, notably and advantageously, the corporation performing the privacy layer 512 will not be able to learn more about the user, since the bank holds the keys to decrypt D. Moreover, in some examples, corporations such as Google^{™} and Apple^{™} already provide payment solutions and can naturally integrate the described fraud detection into their existing systems. In such a scenario, there will be no need for a masks `M1' and `M2'. The privacy layer 512 can store previous HE.Enc(C1), obtain a new HE.Enc(C2) that was computed by the payment terminal 510 or user's phone and finally, compute HE.Enc(D) before sending it to the bank/BPS 515.

In the MPC example of FIG. 5, where MPC uses encryption to 'hide' the information, the flowchart 500 starts at 520 with the card 505 sending a request to the terminal 510. At 525, the terminal 510 obtains the current location (C2), say from a GPS circuit and computes and sends a homomorphic encryption (HE.Enc) of the current location (C2) to the Privacy Layer 512. At 535, the Privacy Layer 512 obtains the previous data, e.g., the homomorphic encryption of the previous location (HE.Enc(C1)) and at 540 computes the distance HE.Enc(D) between the previous and current location using the homomorphic encryptions of the previous location (HE.Enc(C1)) and the current location (HE.Enc(C2)). Thus, it is envisaged that the communications from the card 505 to the Terminal 510 to the BPS 515 can either go "through" the privacy layer 512, as illustrated in FIG. 5, or the terminal 510 and card 505 and the bank can communicate with the privacy layer 512 separately on their own (in parallel whilst communicating with each other).

In this example, at 545, the Privacy Layer 512 stores the current location (HE.Enc(C2)), i.e., to be used as the previous location in a next authentication. At 550, the BPS 515 decrypts the received distance HE.Enc(D) to obtain the distance (D). At 555 the BPS 515 computes a speed, V, based on the computed distance and checks the speed V against a threshold level. Once the BPS 515 has computed the average speed V, the BPS 515 compares V to a speed threshold, below which it can be considered that the move from the first PoS to the second PoS was possible, and thus the second transaction is less likely to be fraudulent. As one example of a threshold, one of the most straightforward approaches is to compare the computed speed V to fastest mode of transportation available to the humanity. As of today, the fastest airplane in the world is NASA's X-43 experimental plane. It was able to reach 11,854 Km/h during a test. Thus, anything going faster than this would extremely likely correspond to a fraud. In practice, more sensible thresholds may be adopted, and in some instances may take into account potential delays with flights or may take into account a possibility of car and/or train journeys if a plane journey is not reasonable. At 560, the BPS 515 sends a response to the terminal 510.

In some examples, it is envisaged that there may be multiple different thresholds used, for example depending on a geographical region where the first and second PoS are situated. Thus, in this example, multiple different thresholds and distance computations may be chosen based on a geographical region where the first transaction and second transaction occurred. For example, if both PoSs are in the same country or region (e.g. same state, county, city) then the threshold speed can be set to a maximum average speed that is identified in that region. In other examples, it is envisaged that if a new PoS is very far from the previous PoS, e.g., on a different continent or different country, then one might assume that the user took an airplane or a fast train. Thus, in such a situation, it is envisaged that the speed threshold may be set to a maximum speed of commercial airplanes, which in some examples may include an additional typical or maximum waiting time in airports. In that case the server side may even also take into account the availability of airports and speed trains in the geographical region, as well as their schedules between an airport/station in the previous PoS region and the current PoS.

In some examples, it is envisaged that these thresholds may correspond to a highest speed that someone could move at and may be set at a conservative enough estimate that will avoid false alerts. Indeed, in some examples, it is envisaged that the distance that was computed using HE is a distance in a straight line, whilst people usually may only move using roads and streets and thus, they will have to make multiple turns and will move on a longer path. Moreover, the user is unlikely to constantly move at the speed limit, e.g., imposed vehicle speed limits, of the region, and at some point (s)he will stop and walk e.g., from a car to a PoS, and this will likely make the average speed drop dramatically.

In some examples, it is envisaged that, if the delta time between the first transaction time and the second transaction time, i.e., between the two authentications is higher than a validity time threshold, e.g., for example a delta time between 12-24 hours (where the validity time threshold may be set depending upon the geographical location between the two authentications, or for example a delta time of maximum more than 24 hours), then some examples assume that this approach may not be valid. That is, it may be assumed that a delta time above the validity time threshold is insufficient for a user to reasonably travel between two respective points, which may be deemed worldwide travel if 24 hours is assumed. In some examples, it is envisaged that a next authentication may be arranged to require additional authentication using encryption procedures, e.g., a user inputting a personal identification number (PIN) or a password. Similarly, in some examples, it is envisaged that the system may require a bootstrap: e.g., additional authentication using encryption may be required the very first time authentication is needed, since there is no data about a previous authentication available.

In some examples, it is envisaged that the terminal may implement several formulas to compute a distance function provided as input to HE.Eval. Indeed, in general the distance between two points on Earth (i.e., assuming an almost sphere) can be computed using Vincenty's formulae that uses the Earth's form. However, for faster estimation, it is envisaged that one can use Haversine formula that assumes that the Earth is a perfect sphere. However, in some examples, it is envisaged that if the terminal knows an approximate location of the previous authentication (e.g., same city or same geographical region) then it can use a simple Euclidian distance computation, which is faster to compute. In such a case, the BPS may send the required information to the terminal, since the BPS knows the approximate location of the previous PoS and the approximate location of the current PoS. In this case, it is envisaged that the BPS may send a flag to the second (current) PoS terminal, signifying which algorithm to use. In this example, it is envisaged that a Euclidian computation may be used if the BPS sees that both PoSs are in the same geographical region (e.g., both in Poland), that a Haversine computation may be used if the two locations are in neighbouring geographical regions (e.g., Spain and France), that a Vincenty computation may be used otherwise. In this manner, the terminal PoS would only learn that the previous location of payment was either far away or in close proximity, without knowing more precise details. In most scenarios this information may be derived from the situation anyway (e.g., in case of a payment in an arrival terminal of an airport it may be assumed that the previous payment was made far away, whilst in a case of a payment in a city centre it is likely that the previous one was made close by and does not really reveal a lot of private information about the client.

In some examples, it is envisaged that the BPS may perform two roles: (i) decrypting the encrypted distance and then (ii) dividing by the time differential to acquire the average speed. In some examples, it is envisaged that another approach would be to split these roles, possibly mandated due to privacy legislation surrounding access to the sensitive data in these computations. Many homomorphic encryption schemes naturally allow simple operations to be performed on ciphertexts, for example division by an integer, and therefore the BPS could apply this operation to the HE.Enc(D) value to obtain an encrypted average speed and send this ciphertext to an external entity that performs decryption. Such an approach would allow a BPS operating in multiple geographic regions to use a single-location decryption infrastructure. This decryption service would then have access to the speed value rather than the distance value (therefore leaking less information).

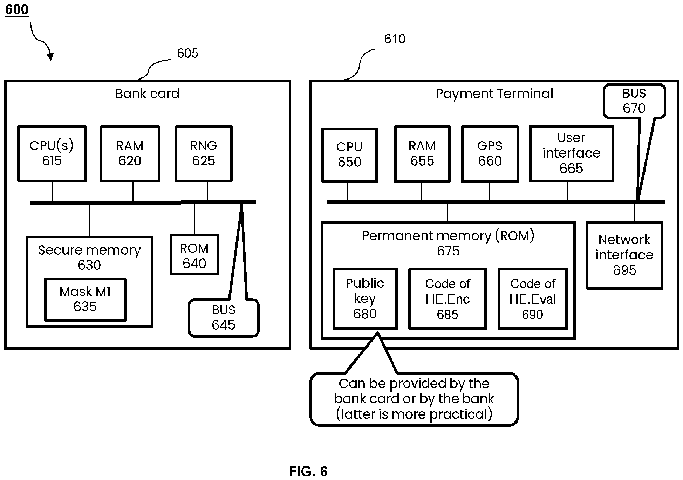

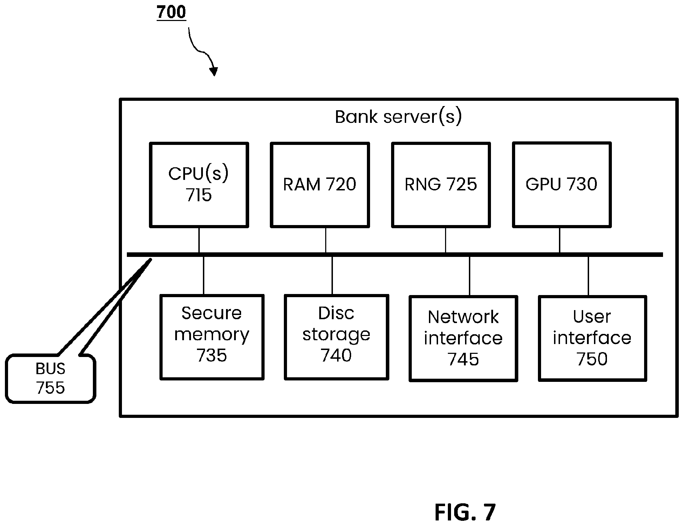

Referring now to FIG. 6, one example of a block diagram 600 of a bank card 605 and a PoS terminal 610 is illustrated, according to some examples. The bank card 605 includes a bus 645 that facilitates various circuits and entities communicating with one another, for example including one or more central processing unit(s) (CPUs) 615, one or more random access memories (RAMs) 620, one or more random number generator (RNG) 625, a secure memory 630 that includes a mask M1 635, a read only memory (ROM) 640. It is envisaged that in some examples, one or more of the various circuits and entities may be optional. The payment terminal 610 includes a bus 670 that facilitates various circuits and entities communicating with one another, for example including one or more central processing unit(s) (CPUs) 650, one or more random access memories (RAMs) 655, one or more global positioning (GPS) circuits 660, a user interface 665, a network interface 695, a permanent memory 675. The permanent memory 675 of the payment terminal 610 includes a public key 680, a code of HE.Enc 685 and a code of HE.Eval 690. It is envisaged that in some examples, one or more of the various circuits and entities may be optional. Referring now to FIG. 7, one example of a bank processing server (BPS) 700 is illustrated, according to some examples. The BPS 700 includes a bus 755 that facilitates various circuits and entities communicating with one another, for example including one or more central processing unit(s) (CPUs) 715, one or more random access memories (RAMs) 720, one or more RNG 725, a graphical user interface (GPU) 730, a secure memory 735, a disc storage 740, a network interface 745, a user interface 750. It is envisaged that in some examples, one or more of the various circuits and entities may be optional. In examples using the architecture in FIG. 6 and FIG. 7, a PoS terminal 610 may authenticate a transaction of a bank card 605, wherein the transaction uses one or more central processing unit(s) (CPUs) 615, one or more RAMs 620, ROM 640, RNG 625, and the secure memory 630 that includes a mask M1 635, a read only memory 640. The PoS terminal 610 identifies a first transaction made at a first physical location, say using CPU 650 and GPS 660, that includes a first transaction time. Subsequently, a bank server 700, receives a request over the network interface 745 for a second transaction, having previously stored the details of the first transaction in in RAM 720 and the CPU 715 identifies that the requested second transaction is made at a second physical location that includes a second transaction time. The CPU 715 of the bank server 700 computes a distance between the first physical location of the PoS terminal 610 and the second physical location of a second PoS terminal. The bank server 700 computes a minimum speed to transition between the first physical location and the second physical location in a delta time between the first transaction time and the second transaction time. The bank server 700 then compares the computed minimum speed to at least one threshold; and determines whether, for example, the requested second transaction is authentic in response to comparing the computed minimum speed to the at least one threshold.

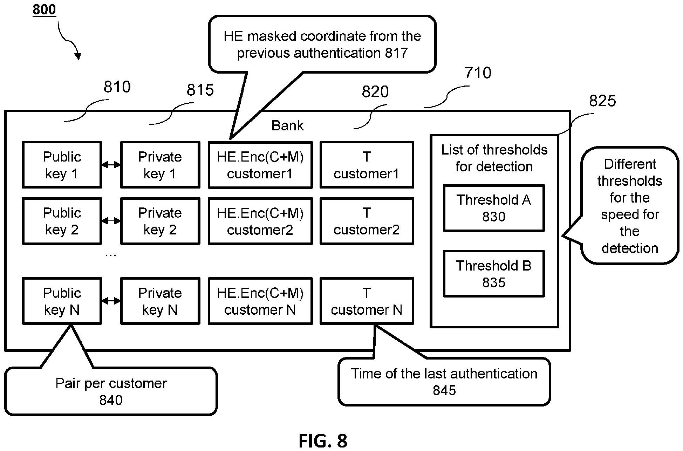

Referring now to FIG. 8, a block diagram 800 of one functional example of a bank processing server (BPS) is illustrated, according to some examples. The example BPS includes a number (range) of stored public keys 810, which are coupled to a corresponding number (range) of stored private keys 815. A pair of the stored public keys 810 and stored private keys 815 are used for encryption and decryption, where HE.Enc(C+M) is a homomorphically encrypted masked coordinate of the last transaction from the last authentication 817, and provided to each customer 840. The example BPS also includes a time (T) of a previous transaction/last authentication 845 for a number (range) of customers corresponding to the number (range) of stored public keys 810 and the corresponding number (range) of stored private keys 815. In this example, the BPS also includes a list of thresholds 825 that it uses for detecting whether a fraud may have been committed and a transaction authentication cannot be provided. Here, different thresholds, such as threshold A 830 and threshold B 835 may be employed to determine a speed.

Thus, examples herein described provide privacy-preserving computation of distance between two physical (i.e., geographical) locations (e.g., a most recent physical location of a payment request and a current physical location of a payment request) followed by a computation of an average speed for the user to move between these two physical locations. The examples herein described may be applicable to applications that require authentication and can be used in different locations, e.g., payment authentication, such that the examples may be employed to provide additional security and fraud detection. In contrast, US9641489B1 and WO2023128341A1 describe types of fraud detection whereby an user location that is encrypted using HE is checked to determine whether one or two users are in the same location or in a single location that was seen previously.

In the foregoing specification, examples have been described with reference to specific examples of embodiments. It will, however, be evident that various modifications and changes may be made therein without departing from the scope as set forth in the appended claims and that the claims are not limited to the specific examples described above.

The connections as discussed herein may be any type of connection suitable to transfer signals from or to the respective nodes, units or devices, for example via intermediate devices. Accordingly, unless implied or stated otherwise, the connections may for example be direct connections or indirect connections. The connections may be illustrated or described in reference to being a single connection, a plurality of connections, unidirectional connections, or bidirectional connections. However, different embodiments may vary the implementation of the connections. For example, separate unidirectional connections may be used rather than bidirectional connections and vice versa. Also, plurality of connections may be replaced with a single connection that transfers multiple signals serially or in a time multiplexed manner. Likewise, single connections carrying multiple signals may be separated out into various different connections carrying subsets of these signals. Therefore, many options exist for transferring signals. Those skilled in the art will recognize that the architectures depicted herein are merely exemplary, and that in fact many other architectures can be implemented which achieve the same functionality.

Any arrangement of components to achieve the same functionality is effectively 'associated' such that the desired functionality is achieved. Hence, any two components herein combined to achieve a particular functionality can be seen as 'associated with' each other such that the desired functionality is achieved, irrespective of architectures or intermediary components. Likewise, any two components so associated can also be viewed as being 'operably connected,' or 'operably coupled,' to each other to achieve the desired functionality.

Furthermore, those skilled in the art will recognize that boundaries between the above-described operations merely illustrative. The multiple operations may be combined into a single operation, a single operation may be distributed in additional operations and operations may be executed at least partially overlapping in time. Moreover, alternative embodiments may include multiple instances of a particular operation, and the order of operations may be altered in various other embodiments. Also, for example, in one embodiment, the illustrated examples may be implemented as circuitry located on a single integrated circuit or within a same device.

In some examples, the various components within the bank server or PoS can be realized in discrete or integrated component form, with an ultimate structure therefore being an application-specific or design selection. As the illustrated embodiments may, for the most part, be implemented using electronic components and circuits known to those skilled in the art, details will not be explained in any greater extent than that considered necessary as illustrated below, for the understanding and appreciation of the underlying concepts of the herein described and in order not to obfuscate or distract from the teachings of the herein described.

Also, the examples, or portions thereof, may be implemented as software or code representations of physical circuitry or of logical representations convertible into physical circuitry, such as in a hardware description language of any appropriate type. Also, the examples herein described are not limited to physical devices or units implemented in non-programmable hardware but can also be applied in programmable devices or units able to perform the desired sampling error and compensation by operating in accordance with suitable program code, such as minicomputers, personal computers, notepads, personal digital assistants, automotive and other embedded systems, cell phones and various other wireless devices, commonly denoted in this application as 'computer systems'. However, other modifications, variations and alternatives are also possible. The specifications and drawings are, accordingly, to be regarded in an illustrative rather than in a restrictive sense.

In the claims, any reference signs placed between parentheses shall not be construed as limiting the claim. The word 'comprising' does not exclude the presence of other elements or steps then those listed in a claim. Furthermore, the terms 'a' or 'an,' as used herein, are defined as one or more than one. Also, the use of introductory phrases such as 'at least one' and 'one or more' in the claims should not be construed to imply that the introduction of another claim element by the indefinite articles 'a' or 'an' limits any particular claim containing such introduced claim element to inventions containing only one such element, even when the same claim includes the introductory phrases 'one or more' or 'at least one' and indefinite articles such as 'a' or 'an.' The same holds true for the use of definite articles. Unless stated otherwise, terms such as 'first' and 'second' are used to arbitrarily distinguish between the elements such terms describe. Thus, these terms are not necessarily intended to indicate temporal or other prioritization of such elements. The mere fact that certain measures are recited in mutually different claims does not indicate that a combination of these measures cannot be used to advantage.

## Claims

1. A method (200, 300, 400) for authenticating a transaction, the method comprising:
identifying (425, 535) a first transaction made at a first physical location that includes a first transaction time;
receiving (205) a request for a second transaction;
identifying (210, 240) the requested second transaction is made at a second physical location that includes a second transaction time;
computing using encryption (235) a distance between the first physical location and the second physical location;
computing (320) a minimum speed to transition between the first physical location and the second physical location in a delta time between the first transaction time and the second transaction time;
comparing (330) the computed minimum speed to at least one threshold; and
determining (335) whether the requested second transaction is authentic in response to comparing the computed minimum speed to the at least one threshold.

2. The method (200, 300, 400) of Claim 1 comprising the first transaction being made by the bank card at a first point of sale, PoS, terminal and the second transaction being made by the bank card at a second PoS terminal, wherein computing using encryption (235) a distance between the first physical location and the second physical location is performed by the second PoS terminal; and the computed distance is sent to a banking payment server that performs computing (320) a minimum speed and comparing (330) the computed minimum speed to the at least one threshold and determining (335) whether the requested second transaction is authentic for payment banking authentication.

3. The method (200, 300, 400) of Claim 1 or Claim 2, wherein identifying (425, 535) a first transaction made at a first physical location comprises identifying (425, 535) a homomorphic encryption of the first physical location and identifying (210, 240) the requested second transaction comprises identifying (210, 240) a homomorphic encryption of the second physical location and computing using encryption (235) a distance between the first physical location and the second physical location comprises computing using a homomorphic encryption of the distance.

4. The method (200, 300, 400) of Claim 3 further comprising:
generating, by a banking card, a first random mask, M1, for the first physical location;
sending M1 to a first PoS terminal;
computing, by a second PoS terminal a homomorphic encryption of the first physical location and the first random mask, M1;
obtaining, by the second PoS terminal, the second physical location; and
computing and sending (235, 445) the distance between the first physical location and the second physical location to a bank payment server.

5. The method (200, 300, 400) for authenticating a transaction of Claim 4 further comprising:
generating and sending a second random mask, M2, for the second physical location by a banking card to the second PoS terminal; and
computing and sending (235, 445) by the second PoS terminal to the bank payment server a homomorphic encryption of the second physical location and the second random mask, M2;
wherein the banking payment server performs computing (320) a minimum speed and comparing (330) the computed minimum speed to the at least one threshold and determining (335) whether the requested second transaction is authentic for payment banking authentication.

6. The method (200, 300, 400) of Claim 1 or Claim 2, wherein identifying a second transaction made at a second physical location comprises using a privacy layer (512) between second PoS terminal and the banking payment server wherein the privacy layer receives a homomorphic encryption (HE.Enc(C2)) of the current location (C2) from the second PoS terminal and obtains a homomorphic encryption of the first location (HE.Enc(C1)) from the banking payment server and in response thereto computes using encryption a distance HE.Enc(D) between the previous location and the current location.

7. The method (200, 300, 400) of any preceding Claim wherein determining (335) whether the requested second transaction is authentic in response to comparing the computed minimum speed to the at least one threshold comprises verifying a maximum achievable average speed to traverse the distance HE.Enc(D) between the previous and current location.

8. The method (200, 300, 400) of Claim 1 or Claim 2, further comprising computing a distance between two points using multi-party computation, MPC, where the distance is computed using encrypted geographical coordinates of the first physical location and the second physical location.

9. The method (200, 300, 400) of any preceding Claim wherein comparing (330) the computed minimum speed to the at least one threshold comprises comparing (330) the computed minimum speed to a plurality of different thresholds, where each of the plurality of different thresholds indicates a different risk assessment of a fraudulent activity having taken place.

10. The method (300) of any preceding Claim wherein the delta time between the first transaction time and the second transaction time comprises a validity time threshold, and wherein the operations of computing using encryption (235) a distance between the first physical location and the second physical location; computing (320) a minimum speed to transition between the first physical location and the second physical location in the delta time between the first transaction time and the second transaction time; comparing (330) the computed minimum speed to the at least one threshold; and determining (335) whether the requested second transaction is authentic in response to comparing the computed minimum speed to the at least one threshold are not adopted if the delta time exceeds the validity time threshold.

11. The method (300) of Claim 10 wherein the validity time threshold between authentications is set as one of: 24 hours, a delta time between 12 and 24 hours.

12. The method (300) of any preceding Claim wherein the at least one threshold comprises multiple different thresholds and distance computations are chosen based on a geographical region where the first transaction and second transaction occurred.

13. The method (300) of any preceding Claim wherein determining (335) whether the requested second transaction is authentic in response to comparing the computed minimum speed to the at least one threshold further comprises determining if an authentication of the first transaction uses a stronger verification mechanism than the authentication of the second transaction and if the first transaction uses a stronger verification mechanism then the second transaction is identified as fraudulent.

14. The method (300) of Claim 13 wherein if the first transaction uses a stronger verification mechanism than the second transaction, a chain of transaction verifications are built from the first transaction with respect to a computation of average speed and a computation of time delays.

15. A bank server (700) comprises:
a network interface (745) for operably coupling to a plurality of point of sale, PoS, terminals (610);
a central processing unit, CPU, (715);
at least one random access memory, RAM (720),
wherein the network interface (745) receives a first authentication of a first transaction of a bank card (605) made at a first physical location at a first transaction time, and the CPU (715) processes the first authentication and the RAM (720) stores the first physical location at the first transaction time for the bank card (605):
wherein the network interface (745) receives a second authentication of a second transaction of the bank card (605) made by a second PoS terminal at a second physical location at a second transaction time, and the CPU (715) processes the second authentication and identifies that the requested second transaction is made at a second physical location that includes a second transaction time, and the RAM (720) stores the second physical location at the second transaction time for the bank card (605):
wherein the CPU (715) is arranged to:
compute using encryption a distance between the first physical location of the PoS terminal (610) and the second physical location of the second PoS terminal;
compute a minimum speed to transition between the first physical location and the second physical location in a delta time between the first transaction time and the second transaction time;
compare the computed minimum speed to at least one threshold; and
determine whether the requested second transaction is authentic in response to comparing the computed minimum speed to the at least one threshold.

## Amended claims

### Amended claims in accordance with Rule 137(2) EPC.

1. A method (200, 300, 400) for authenticating a transaction, the method comprising:
identifying (425, 535) a first transaction, made at a first physical location by a bank card at a first point of sale, PoS, terminal, that includes a first transaction time and comprises identifying (425, 535) a homomorphic encryption of the first physical location;
generating, by a banking card, a first random mask, M1, for the first physical location;
sending M1 to a first PoS terminal;
computing, by the first PoS terminal, a homomorphic encryption of the first physical location and the first random mask, M1;
receiving (205) a request for a second transaction;
identifying (210, 240) the requested second transaction, made at a second physical location by the bank card at a second PoS terminal, that includes a second transaction time and comprises identifying (210, 240) a homomorphic encryption of the second physical location;;
obtaining, by the second PoS terminal, the second physical location;
computing, by the second PoS terminal, using encryption (235) a distance between the first physical location and the second physical location, which computing comprises computing using a homomorphic encryption of the distance;
computing and sending (235, 445) the distance between the first physical location and the second physical location to a bank payment server; and
by the banking payment server:
computing (320) a minimum speed to transition between the first physical location and the second physical location in a delta time between the first transaction time and the second transaction time;
comparing (330) the computed minimum speed to at least one threshold; and
determining (335) whether the requested second transaction is authentic in response to comparing the computed minimum speed to the at least one threshold.

2. The method (200, 300, 400) for authenticating a transaction of Claim 1 further comprising:
generating and sending a second random mask, M2, for the second physical location by a banking card to the second PoS terminal; and
computing and sending (235, 445) by the second PoS terminal to the bank payment server a homomorphic encryption of the second physical location and the second random mask, M2;
wherein the banking payment server performs computing (320) a minimum speed and comparing (330) the computed minimum speed to the at least one threshold and determining (335) whether the requested second transaction is authentic for payment banking authentication.

3. The method (200, 300, 400) of Claim 1 or Claim 2, wherein identifying a second transaction made at a second physical location comprises using a privacy layer (512) between second PoS terminal and the banking payment server wherein the privacy layer receives a homomorphic encryption (HE.Enc(C2)) of the current location (C2) from the second PoS terminal and obtains a homomorphic encryption of the first location (HE.Enc(C1)) from the banking payment server and in response thereto computes using encryption a distance HE.Enc(D) between the previous location and the current location.

4. The method (200, 300, 400) of any preceding Claim wherein determining (335) whether the requested second transaction is authentic in response to comparing the computed minimum speed to the at least one threshold comprises verifying a maximum achievable average speed to traverse the distance HE.Enc(D) between the previous and current location.

5. The method (200, 300, 400) of Claim 1 or Claim 2, further comprising computing a distance between two points using multi-party computation, MPC, where the distance is computed using encrypted geographical coordinates of the first physical location and the second physical location.

6. The method (200, 300, 400) of any preceding Claim wherein comparing (330) the computed minimum speed to the at least one threshold comprises comparing (330) the computed minimum speed to a plurality of different thresholds, where each of the plurality of different thresholds indicates a different risk assessment of a fraudulent activity having taken place.

7. The method (300) of any preceding Claim wherein the delta time between the first transaction time and the second transaction time comprises a validity time threshold, and wherein the operations of computing using encryption (235) a distance between the first physical location and the second physical location; computing (320) a minimum speed to transition between the first physical location and the second physical location in the delta time between the first transaction time and the second transaction time; comparing (330) the computed minimum speed to the at least one threshold; and determining (335) whether the requested second transaction is authentic in response to comparing the computed minimum speed to the at least one threshold are not adopted if the delta time exceeds the validity time threshold.

8. The method (300) of Claim 7 wherein the validity time threshold between authentications is set as one of: 24 hours, a delta time between 12 and 24 hours.

9. The method (300) of any preceding Claim wherein the at least one threshold comprises multiple different thresholds and distance computations are chosen based on a geographical region where the first transaction and second transaction occurred.

10. The method (300) of any preceding Claim wherein determining (335) whether the requested second transaction is authentic in response to comparing the computed minimum speed to the at least one threshold further comprises determining if an authentication of the first transaction uses a stronger verification mechanism than the authentication of the second transaction and if the first transaction uses a stronger verification mechanism then the second transaction is identified as fraudulent.

11. The method (300) of Claim 10 wherein if the first transaction uses a stronger verification mechanism than the second transaction, a chain of transaction verifications are built from the first transaction with respect to a computation of average speed and a computation of time delays.
